# EUROPEAN PATENT SPECIFICATION

(11) **EP 1 039 731 B1**
(45) Date of publication and mention of the grant of the patent: **14.11.2007**
(21) Application number: 00103461.0
(22) Date of filing: 29.02.2000
(51) Int. Cl.: H04M 3/523, H04M 7/12, H04M 3/51, H04M 7/00, H04M 3/428

(54) **Acd multimedia customer contact routing with delay announcements**
Acd Multimedia Gebrauchersverbindungsweglenkung mit Verzögerungsansagen
Routage de contact pour client ACD multimedia avec d'annonces de délai

(30) Priority: 01.03.1999 US 122278 P
(43) Date of publication of application: 27.09.2000
(73) Proprietor: Rockwell Electronic Commerce Corporation, Wood Dale, Illinois 60191 (US)
(72) Inventor: Hymel, Darryl, Batavia, Illinois 60510 (US)
(74) Representative: Modiano, Micaela Nadia

(56) References cited:
- EP-A- 0 740 445
- EP-A- 0 829 996
- CA-A- 2 178 705
- US-A- 5 793 861
- PARIS G ET AL: "THE NEXT GENERATION CALL CENTER" TELCOM REPORT INTERNATIONAL, MUNICH, DE, vol. 19, no. 4, 1996, pages 9-11, XP000618796

## Description

### Field of the Invention

This is a non provisional application, from provisional application Serial No. 60/122,278, filed March 1, 1999. The field of the invention relates to telecommunication systems and more particularly to automatic call distributors.

### Background of the Invention

Automatic call distribution systems are known. Such systems are typically used in an organizational context as a means of distributing telephone calls among a group of agents of the organization. Agents are typically segregated into groups to serve particular call targets within an organization.

Often the organization disseminates a single telephone number to its customers and to the public in general as a means of contacting the organization. As calls are directed to the organization from the public switch telephone network (PSTN), the automatic call distribution system directs the calls to its agents based upon some algorithm, typically based upon availability. For example, where all agents are considered equal, the automatic call distributor (ACD) may distribute the calls based upon which agent position (telephone) has been idle the longest.

While ACDs are effective in handling phone calls, they typically provide no mechanism for handling inquiries and contacts through other mediums (e.g., e-mail, the Internet, etc.). Accordingly, a need exists for a method of coordinating agent activity for calls routing over a number of mediums.

Document US 5,793,861 discloses a system and method for transaction processing which includes a transaction interface for receiving and conveying transactions, a memory for storing the transactions in a queue and a processor with an identifier generator and a transaction controller for providing access by an agent to the transaction processing system corresponding to the identifier.

### Summary

A method and apparatus are provided for routing multimedia calls within an automatic call distributor system having a automatic call distributor coupled to the public switched telephone network and a host coupled to the Internet. The method includes the steps of receiving an Internet call from an Internet caller by the host through the Internet, requesting an agent assignment for handling the Internet call from the automatic call distributor coupled to the public switched telephone network and transferring the Internet call to a terminal of the agent assigned by the automatic call distributor.

### Brief Description of the Drawings

FIG. 1 is a block diagram of an automatic call distributor in accordance with an illustrated embodiment of the invention; and
FIG. 2 depicts a webpage that may be used by the automatic call distributor of FIG. 1;
FIG. 3 depicts Internet options that may be used by the system of FIG. 1; and
FIG. 4 depicts an information presentation window used by the system of FIG. 1.

### Detailed Description of a Preferred Embodiment

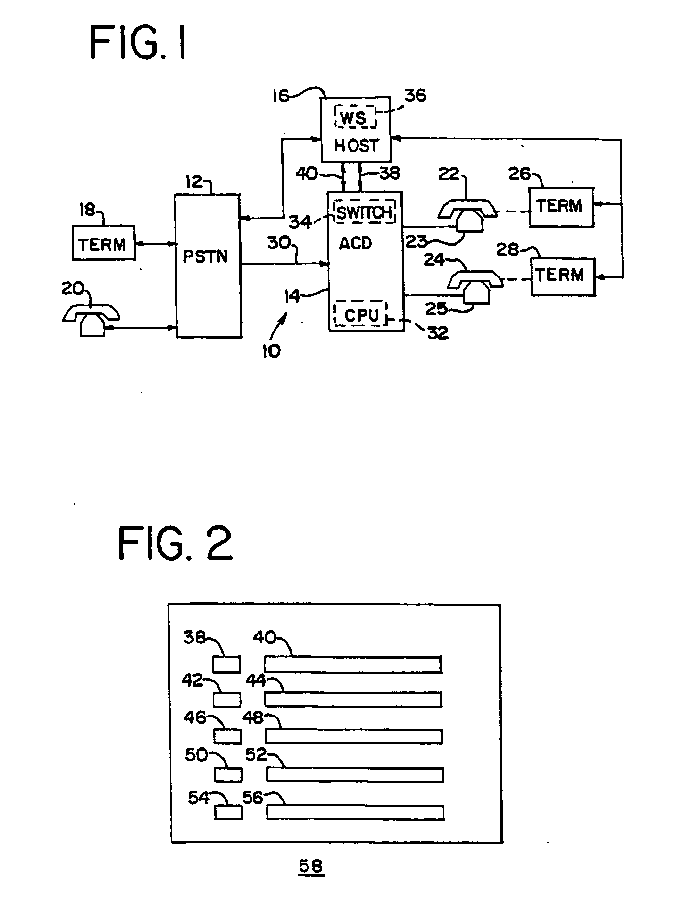

FIG. 1 is a block diagram of a telephone system 10, generally, in accordance with an illustrated embodiment of the invention. Under the illustrated embodiment, an automatic call distributor (ACD) 14 (e.g., a TRANSCEND ACD sold by Rockwell International) may receive calls from any of a number of callers 20 and automatically distribute the calls to any of a number of agents 22, 24.

Under the illustrated embodiment, calls may be received at the ACD 14 from the PSTN 12. As a call arrives, it may be delivered with associated call information (e.g., ANI, DNIS, etc.). As a call is detected, it may be assigned a unique call identification number by the ACD 14.

Based upon the associated call information, the ACD 14 may determine a call target intended by a caller (not shown) calling from a remotely located telephone 20. For example, an operator (not shown) of the ACD system 10 may provide a number of telephone numbers based upon function (e.g., a first telephone number may be provided to contact sales, a second telephone number may be provided for service, etc.). A CPU 32 within the ACD 14 may identify the call target based upon a content of the associated call information.

Each call target may have a number of agents 22, 24 designated for handling calls to that call target. The agents 22, 24 designated for a particular call target together form an agent group.

Once a call target (and agent group) has been identified, the CPU 32 functions to identify an agent within the group to handle the call. Any of a number of algorithms may be used to identify the agent 22, 24. An agent may be designated based upon the most skilled for that call type or upon which agent has been idle the longest.

Once an agent has been identified, the CPU 32 may instruct a switch 34 within the ACD 14 to form a connection between a trunk line upon which the call was detected and the identified (designated) agent 22, 24.

The CPU 14 may also send a call completion message to the host 16. The call completion message may contain the associated call information, designated agent and call identifier to the host. The host 16 by reference to ANI information of the associated call information may identify customer records associated with that ANI information and display the identified call records on a terminal 26, 28 of the designated agent.

In accordance with another feature of the illustrated embodiment, the host 16 may maintain a website 36 for the convenience of customers. On the website 36, the host 16 may offer information (FIG. 2) on a number of products. The information may be provided in the form of an interactive webpage 58. A series of product options 40, 44, 48 may be provided in a first area of the webpage 58. A product option may be selected by activation of an associated softkey 38, 42, 46.

Alternatively, an product keyword may be entered into another area 52. Activation of an associated softkey 50 may cause a search engine (not shown) of the website 36 to search the website for information related to the entered keyword.

As a further alternative, a website user (also referred to herein as a caller) may request a conversation with an agent of the ACD system 10. A descriptive header 56 may be provided instructing the caller to activate a softkey 54 to initiate such conversation.

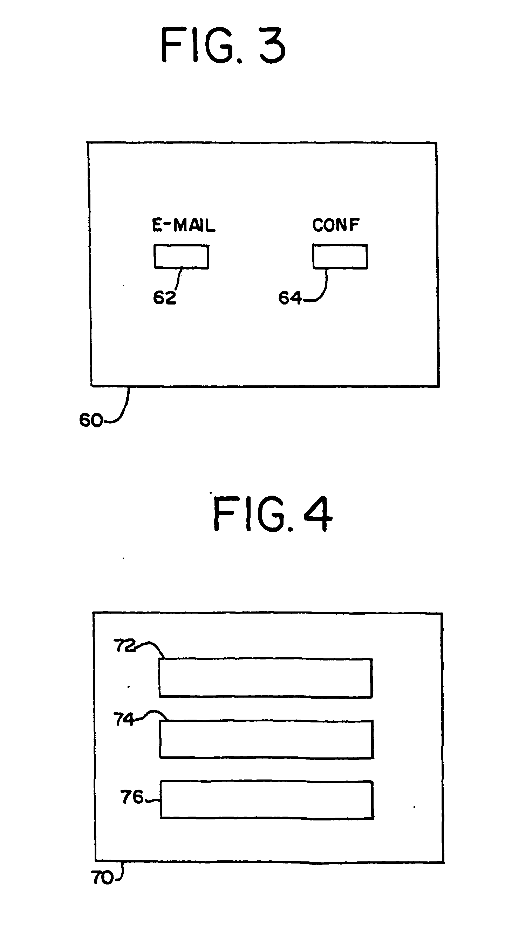

Upon activating the softkey 54 requesting a conversation, a conversational webpage 60 (FIG. 3) may be presented to the caller. The caller may be offered the option of initiating a off-line conversation using e-mail or a real-time conversation. The e-mail option may be initiated by activation of a softkey 62 with an e-mail label. A real-time conversation may be initiated by activation of a second softkey 64.

Upon activation of the e-mail softkey 62, a text box is presented to the caller within which the caller may enter a message. The text box may have associated text asking the caller for a name and a telephone number for a return call. Any text entered by the caller would be stored by the host 16 for subsequent response by an agent. A path for a return message may be provided by a telephone number entered by the caller or an agent may return the call as an e-mail message using an Internet Protocol (IP) address retrieved by the initial access request to the website 36 from the caller.

Alternatively, the caller may select a real-time conversation by activating the conference softkey 64. The conference softkey 64 may be used to activate features where the caller and assigned agent may exchange audio information as well as exchange text or drawings through an interactive window. The creation of the interactive audio and visual information may be executed under any of a number of different protocols (e.g., NetMeeting provided by Microsoft Corp.).

Under the illustrated embodiment, e-mail messages or real-time conferences are handled in a manner equivalent to a conventional telephone call. For example, a conventional call arrives over trunk lines 30, is assigned a call identifier and may be placed in a call queue maintained by the CPU 32. When an agent becomes available, the CPU 32 selects the agent and instructs the switch 34 to connect the call to the selected agent.

With regard to e-mail messages or real-time conferences, the host 16 may send a simulated call request to the CPU 32. The host 16 may send the call request over a TCP/IP connection 38 to a call application operating on the CPU 32 or may seize a connection on an incoming trunk 40 to the ACD 14 and send a set of simulated associated call information to the ACD 14.

In either case, the CPU 32 assigns a call identifier and assigns an agent to the call. Upon selection of an agent, the CPU 32 sends a call completion message to the host 16 including an identifier of the selected agent.

With the call completion message (and identity of the assigned agent), the host 16 may either forward the e-mail message from the caller or act to complete the real-time conference connection between the caller and assigned agent 22, 24.

Also, upon selecting an agent, the CPU 32 may instruct the switch 34 to connect the selected agent 22, 24 to a dummy load. Connection of the selected agent to a dummy load may be used to prevent the agent from being assigned to another call while the agent is handling the e-mail or real-time conference. A release button 23, 25 may be provided on a telephone of the agent 22, 24 to signal the CPU 32 when the e-mail or real-time conference is completed and the agent is ready for another call.

While the caller is waiting for assignment of an agent, a caller over a conventional voice channel may be presented with information and options regarding the call target. Similarly, a caller requesting a real-time conference may also be presented with information and options.

For example, a screen 70 (FIG. 4) may be presented to a caller waiting for a real-time conference. A first window 72 may present information about the real-time conference. An estimated time may be presented as to the time remaining until an assigned agent would be available to participate in the conference. Alternatively, the first window may request information from caller (e.g., an account number, product information, etc.). A second window 74 may be provided for entry of information by the caller.

A third window 76 may be provided for presentation of graphics to the caller as the caller waiting for the real-time conference. A animated cartoon figure may provided for the amusement of the caller and to maintain the interest of the caller as the caller waits.

A specific embodiment of a method and apparatus for a method of allocating resources within an automatic call distributor has been described for the purpose of illustrating the manner in which the invention is made and used. It should be understood that the implementation of other variations and modifications of the invention and its various aspects will be apparent to one skilled in the art, and that the invention is not limited by the specific embodiments described.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method of routing multimedia calls within an automatic call distributor system (10) having a automatic call distributor (14) coupled to the public switched telephone network (12) and a host (16) coupled to the Internet (36), such method **characterized in that** it comprises the steps of:
receiving an Internet call from an Internet caller by the host (16) through the Internet (36);
requesting an agent assignment for handling the Internet call from the automatic call distributor (14) coupled to the public switched telephone network(12), said step of requesting comprising sending a request with a set of simulated associated call information over a TCP/IP connection from the host (16) to a call application operating within the automatic call distributor (14);
sending by the automatic call distributor (14), upon selection of an agent, a call completion message to the host (16), including an identifier of the selected agent; and
transferring the Internet call by the host (16) to a terminal (26, 28) of the agent assigned by the automatic call distributor (14).

2. The method of routing multimedia calls as in claim 1 further comprising queuing the request for an agent assignment.

3. The method of routing multimedia calls as in claim 1 wherein the step of queuing the request for an agent assignment further comprises estimating a time length of the queue.

4. The method of routing multimedia calls as in claim 3 wherein the step of estimating a time length of the queue further comprises transferring the estimated time to the Internet caller.

5. The method of routing multimedia calls as in claim 1 wherein the step of transferring the Internet call to the agent assigned by the automatic call distributor (14) further comprises setting up a real-time Internet conference with the caller.

6. The method of routing multimedia calls as in claim 5 wherein the step of setting up the real-time Internet conference with the caller further comprises exchanging audio and text between the assigned agent and Internet caller through an interactive window.

7. The method of routing multimedia calls as in claim 5 wherein the step of setting up a real-time conference with the caller further comprises presenting an information screen to the caller about the real-time call.

8. The method of routing multimedia calls as in claim 5 wherein the step of presenting the information screen to the caller further comprises presenting an estimated time until an assigned agent will be available to participate in the conference.

9. The method of routing multimedia calls as in claim 5 wherein the step of presenting the information screen to the caller about the real-time call further comprises presenting an information request screen to the Internet caller.

10. The method of routing multimedia calls as in claim 5 wherein the step of presenting the information screen to the caller further comprises presenting an animated cartoon figure for entertaining the Internet caller while the caller waits for completion of setup of the real-time conference.

11. The method of routing multimedia calls as in claim 1 wherein the step of requesting an agent assignment for handling the Internet call from the automatic call distributor (14) further comprises seizing a connection on an incoming trunk to the automatic call distributor (14) and sending simulated call associated information to the automatic call distributor (14).

12. The method of routing multimedia calls as in claim 1 wherein the step of transferring the Internet call to the agent assigned by the automatic call distributor further comprises connecting a telephone of the assigned agent to a dummy load to avoid assigning the assigned agent to another call during the Internet call.

13. The method of claim 1 further including:
queuing the Internet call in a common call queue along with other calls received through the public switched telephone network based (12) upon a time of arrival.

14. The method of routing multimedia calls as in claim 13 wherein the step of estimating a time period before the queued Internet call will reach a front of the queue further comprises transferring the estimate to the Internet caller.

15. A system for routing multimedia calls within an automatic call distributor system having a automatic call distributor (14) coupled to the public switched telephone network (12) and a host (16) coupled to the Internet (36), such system **characterized in that** it comprises:
means for receiving an Internet call from an Internet caller by the host (16) through the Internet;
means for requesting an agent assignment for handling the Internet call from the automatic call distributor (14), said mean for requesting comprising means for sanding a request with a set of simulated associated call information over a TCP/IP connection from the host (16) to a call application operating within the automatic call distributor (14);
means for sending by the automatic call distributor (14), upon selection of an agent, a call completion message to the host (16), including an identifier of the selected agent: and
means for transferring the Internet call by the host (16) to the agent assigned by the automatic call distributor (14).

16. The system for routing multimedia calls as in claim 15 further comprising means for queuing the request for an agent assignment.

17. The system for routing multimedia calls as in claim 15 wherein the means for queuing the request for an agent assignment further comprises means for estimating a time length of the queue.

18. The system for routing multimedia calls as in claim 17 wherein the means for estimating a time length of the queue further comprises means for transferring the estimated time to the Internet caller.

19. The system for routing multimedia calls as in claim 15 wherein the means for transferring the Internet call to the agent assigned by the automatic call distributor further comprises means for setting up a real-time Internet conference with the caller.

20. The system for routing multimedia calls as in claim 19 wherein the means for setting up the real-time Internet conference with the caller further comprises means for exchanging audio and text between the assigned agent and Internet caller through an interactive window.

21. The system for routing multimedia calls as in claim 19 wherein the means for setting up a real-time conference with the caller further comprises means for presenting an information screen to the caller about the real-time call.

22. The system for routing multimedia calls as in claim 19 wherein the means for presenting the information screen to the caller further comprises means for presenting an estimated time until an assigned agent will be available to participate in the conference.

23. The system for routing multimedia calls as in claim 19 wherein the means for presenting the information screen to the caller about the real-time call further comprises means for requesting information from the Internet caller.

24. The system for routing multimedia calls as in claim 17 wherein the means for presenting the information screen to the caller further comprises means for presenting an animated cartoon figure for entertaining the Internet caller.

25. The system for routing multimedia calls as in claim 15 wherein the means for requesting an agent assignment for handling the Internet call from the automatic call distributor (14)
further comprises means for seizing a connection on an incoming trunk to the automatic call distributor (14) and sending simulated call associated information to the automatic call distributor (14).

26. The system for routing multimedia calls as in claim 24 wherein the means for transferring the Internet call to the agent assigned by the automatic call distributor (14) further comprises means for connecting a telephone of the assigned agent to a dummy load.

27. The system of claim 15, further including an automatic call distributor system having a automatic call distributor (14) coupled to the public switched telephone network (12) and a host (16) coupled to the Internet(36), such system comprising:
a host (16) adapted to receive an Internet call from an Internet caller through the Internet (36);
an agent processor operating from within the host and adapted to request an agent assignment for handling the Internet call from the automatic call distributor (14); and
a routing processor adapted to transfer the Internet call to a terminal (26, 28) of the agent assigned by the automatic call distributor (14).

28. The system for routing multimedia calls as in claim 27 further comprising a queuing processor adapted to queue the request for an agent assignment.

29. The system for routing multimedia calls as in claim 27 wherein the routing processor further comprises an Internet conferencing protocol for setting up a real-time Internet conference with the caller.

30. The system for routing multimedia calls as in claim 29 wherein the conferencing protocol further comprises an interactive window adapted to exchanging audio and text between the assigned agent and Internet caller through the Internet.

31. The system for routing multimedia calls as in claim 29 wherein the conferencing protocol further comprises an information screen adapted to present information to the caller about the real-time call.

32. The system for routing multimedia calls as in claim 29 wherein the information screen further comprises a timer adapted to provide an estimated time until an assigned agent will be available to participate in the conference.

33. The systems for routing multimedia calls as in claim 29 wherein the information screen further comprises an information entry window adapted to request information from the Internet caller.

34. The system for routing multimedia calls as in claim 29 wherein the information screen to the caller further comprises an animated cartoon figure for entertaining the Internet caller.

## Patentansprüche

1. Ein Verfahren zum Routen von Multimedia-Anrufen innerhalb eines automatischen Anrufverteilersystems (10), das einen automatischen Anrufverteiler (14) hat, der mit dem öffentlichen Fernsprechwählnetz (12) verbunden ist, und einen Host (16) hat, der mit dem Internet (36) verbunden ist, wobei das Verfahren **dadurch gekennzeichnet ist, dass** es folgende Schritte umfasst:
das Empfangen eines Internet-Anrufs von einem Internet-Anrufer durch den Host (16) mittels dem Internet (36);
das Anfordern einer Angenten-Zuordnung, um den Internet-Anruf von dem automatischen Anrufverteiler (14) abzuwickeln, der mit dem öffentlichen Fernsprechwählnetz (12) verbunden ist, wobei der Anforderungsschritt das Senden einer Anfrage mit einem Satz von simulierten assoziierten Anruf-Informationen über eine TCP/IP- Verbindung von dem Host (16) an eine Anruf-Applikation umfasst, die innerhalb des automatischen Anrufverteilers (14) arbeitet;
das Senden durch den automatischen Anrufverteiler (14) bei der Wahl eines Agenten einer Anruffertigstellungsnachricht an den Host (16), die einen Bezeichner für den ausgewählten Agenten einschließt; und
das Übergeben des Internet-Anrufs durch den Host (16) an ein Endgerät (26, 28) des vom automatischen Anrufverteiler (14) zugeordneten Agenten.

2. Das Verfahren zum Routen von Multimedia-Anrufen nach Anspruch 1, das weiterhin die Einreihung in eine Warteschlange der Anfrage nach einer Zuordnung des Agenten umfasst.

3. Das Verfahren zum Routen von Multimedia-Anrufen nach Anspruch 1, worin der Schritt zur Einreihung in eine Warteschlange der Anfrage nach einer Zuordnung des Agenten die Einschätzung einer Dauer der Warteschlange umfasst.

4. Das Verfahren zum Routen von Multimedia-Anrufen nach Anspruch 3, worin der Schritt zum Einschätzen der Dauer der Warteschlange weiterhin das Überführen der geschätzten Zeitspanne an den Internet-Anrufer umfasst.

5. Das Verfahren zum Routen von Multimedia-Anrufen nach Anspruch 1, worin der Schritt zum Überführen des Internet-Anrufs an den von dem automatischen Anrufverteiler (14) zugeordneten Agenten weiterhin das Errichten einer Echtzeit-Internet-Konferenz mit dem Anrufer umfasst.

6. Das Verfahren zum Routen von Multimedia-Anrufen nach Anspruch 5, worin der Schritt zum Errichten der Echtzeit-Internet-Konferenz mit dem Anrufer weiterhin den Austausch von Ton und Text zwischen dem zugeordneten Agenten und dem Internet-Anrufer mittels eines interaktiven Fensters umfasst.

7. Das Verfahren zum Routen von Multimedia-Anrufen nach Anspruch 5, worin der Schritt zum Errichten einer Echtzeit-Konferenz mit dem Anrufer weiterhin umfasst, dass dem Anrufer eine Informationsanzeige über den Echtzeitanruf vorgelegt wird.

8. Das Verfahren zum Routen von Multimedia-Anrufen nach Anspruch 5, worin der Schritt, der dem Anrufer die Informationsanzeige präsentiert, das Zeigen einer geschätzten Zeit umfasst, bis ein zugeordneter Agent zur Verfügung stehen wird, um in der Konferenz teilnehmen zu können.

9. Das Verfahren zum Routen von Multimedia-Anrufen nach Anspruch 5, worin der Schritt, der dem Anrufer die Informationsanzeige über den Echtzeitanruf präsentiert, weiterhin umfasst, dass dem Internet-Anrufer eine Informationsanfragenanzeige gezeigt wird.

10. Das Verfahren zum Routen von Multimedia-Anrufen nach Anspruch 5, worin der Schritt, der dem Anrufer die Informationsanzeige präsentiert, das Zeigen einer Animations-Zeichentrickfigur umfasst, um den Internet-Anrufer zu unterhalten, während der Anrufer auf die Fertigstelllung der Errichtung der Echtzeit-Konferenz wartet.

11. Das Verfahren zum Routen von Multimedia-Anrufen nach Anspruch 1, worin der Schritt zum Anfordern einer Zuordnung des Agenten zum Abwickeln des Internet-Anrufs von dem automatischen Anrufverteiler (14) weiterhin das Belegen einer Verbindung auf einer ankommenden Hauptleitung für den automatischen Anrufverteiler (14) und das Senden der zum simulierten Anruf gehörenden Information an den automatischen Anrufverteiler (14) umfasst.

12. Das Verfahren zum Routen von Multimedia-Anrufen nach Anspruch 1, worin der Schritt zum Überführen des Internet-Anrufs an den vom automatischen Anrufverteiler zugeordneten Agenten weiterhin das Verbinden eines Telefons des zugeordneten Agenten mit einem Dummy umfasst, um zu verhindern, dass der zugeordnete Agent während des Internet-Anrufs einem anderen Anruf zugeordnet wird.

13. Das Verfahren nach Anspruch 1, das weiterhin folgendes einschließt:
die Einreihung des Internet-Anrufs in eine gemeinsame Anruf-Warteschlange zusammen mit anderen mittels des öffentlichen Fernsprechwählnetzes empfangenen Anrufen auf der Grundlage einer Ankunftszeit (12).

14. Das Verfahren zum Routen von Multimedia-Anrufen nach Anspruch 13, worin der Schritt zum Einschätzen einer Zeitspanne, bevor sich der in eine Warteschlange eingereihte Internet-Anruf vorne an der Warteschlange befindet, weiterhin das Überführen der geschätzten Zeit an den Internet-Anrufer umfasst.

15. Ein System zum Routen von Multimedia-Anrufen innerhalb eines automatischen Anrufverteilersystems (10), das einen automatischen Anrufverteiler (14) hat, der mit dem öffentlichen Fernsprechwählnetz (12) verbunden ist, und einen Host (16) hat, der mit dem Internet (36) verbunden ist, wobei das System **dadurch gekennzeichnet ist, dass** es folgendes umfasst:
ein Mittel, um durch den Host (16) mittels Internet einen Internet-Anruf von einem Internet-Anrufer zu empfangen;
ein Mittel zum Anfordern einer Zuordnung des Agenten, um den Internet-Anruf vom automatischen Anrufverteiler (14) abzuwickeln, wobei das Mittel zum Anfordern ein Mittel zum Senden einer Anfrage mit einem Satz von simulierten dazugehörigen Anruf-Informationen über eine TCP/IP-Verbindung vom Host (16) an eine Anruf-Applikation umfasst, die innerhalb des automatischen Anrufverteilers (14) arbeitet;
ein Mittel, um durch den automatischen Anrufverteiler (14), bei der Auswahl eines Agenten, eine Anruf-Fertigstellungsnachricht an den Host (16) zu senden, die einen Bezeichner für den ausgewählten Agenten einschließt; und
ein Mittel, um den Internet-Anruf durch den Host (16) an den vom automatischen Anrufverteiler (14) zugeordneten Agenten zu überführen.

16. Das System zum Routen von Multimedia-Anrufen nach Anspruch 15, das weiterhin ein Mittel zur Einreihung in eine Warteschlange der Anfrage nach einer Zuordnung des Agenten umfasst.

17. Das System zum Routen von Multimedia-Anrufen nach Anspruch 15, worin das Mittel zur Einreihung in eine Warteschlange der Anfrage nach einer Zuordnung des Agenten weiterhin ein Mittel zur Einschätzung einer Dauer der Warteschlange umfasst.

18. Das System zum Routen von Multimedia-Anrufen nach Anspruch 17, worin das Mittel zum Einschätzen der Dauer der Warteschlange weiterhin ein Mittel zum Überführen der geschätzten Zeitspanne an den Internet-Anrufer umfasst.

19. Das System zum Routen von Multimedia-Anrufen nach Anspruch 15, worin das Mittel zum Überführen des Internet-Anrufs an den vom automatischen Anrufverteiler (14) zugeordneten Agenten weiterhin ein Mittel zum Errichten einer Echtzeit-Internet-Konferenz mit dem Anrufer umfasst.

20. Das System zum Routen von Multimedia-Anrufen nach Anspruch 19, worin das Mittel zum Errichten der Echtzeit-Internet-Konferenz mit dem Anrufer weiterhin ein Mittel zum Austausch von Ton und Text zwischen dem zugeordneten Agenten und dem Internet-Anrufer mittels eines interaktiven Fensters umfasst.

21. Das System zum Routen von Multimedia-Anrufen nach Anspruch 19, worin das Mittel zum Errichten einer Echtzeit-Konferenz mit dem Anrufer weiterhin ein Mittel umfasst, um dem Anrufer eine Informationsanzeige über den Echtzeitanruf vorzulegen.

22. Das System zum Routen von Multimedia-Anrufen nach Anspruch 19, worin das Mittel, das dem Anrufer die Informationsanzeige präsentiert, weiterhin ein Mittel zum Anzeigen einer geschätzten Zeit umfasst, bis ein zugeordneter Agent zur Verfügung stehen wird, um in der Konferenz teilnehmen zu können.

23. Das System zum Routen von Multimedia-Anrufen nach Anspruch 19, worin das Mittel, das dem Anrufer die Informationsanzeige über den Echtzeitanruf präsentiert, weiterhin ein Mittel umfasst, um dem Internet-Anrufer eine Informationsanfragenanzeige zu zeigen.

24. Das System zum Routen von Multimedia-Anrufen nach Anspruch 17, worin das Mittel, das dem Anrufer die Informationsanzeige präsentiert, weiterhin ein Mittel zum Zeigen einer Animations-Zeichentrickfigur umfasst, um den Internet-Anrufer zu unterhalten.

25. Das System zum Routen von Multimedia-Anrufen nach Anspruch 15, worin das Mittel zum Anfordern einer Zuordnung des Agenten zum Abwickeln des Internet-Anrufs vom automatischen Anrufverteiler (14) weiterhin ein Mittel zum Belegen einer Verbindung auf einer ankommenden Hauptleitung für den automatischen Anrufverteiler (14) und zum Senden der zum simulierten Anruf gehörenden Information an den automatischen Anrufverteiler (14) umfasst.

26. Das System zum Routen von Multimedia-Anrufen nach Anspruch 24, worin der Schritt zum Überführen des Internet-Anrufs an den vom automatischen Anrufverteiler zugeordneten Agenten weiterhin ein Mittel zum Verbinden eines Telefons des zugeordneten Agenten mit einem Dummy umfasst.

27. Das System nach Anspruch 15, das weiterhin ein automatisches Anrufverteilersystem einschließt, das einen automatischen Anrufverteiler (14) hat, der mit dem öffentlichen Fernsprechwählnetz (12) verbunden ist, und einen Host (16) hat, der mit dem Internet (36) verbundenen ist, wobei das System folgendes umfasst:
einen Host (16), der ausgebildet ist, um mittels Internet einen Internet-Anruf von einem Internet-Anrufer zu empfangen;
einen Agentenprozessor, der innerhalb des Hosts arbeitet und ausgebildet ist, um eine Agentenzuordnung zum Abwickeln des Internet-Anrufs vom automatischen Anrufverteiler (14) zu verlangen; und
einen Routing-Prozessor, der ausgebildet ist, um den Internet-Anruf an ein Endgerät (26, 28) des vom automatischen Anrufverteilers (14) zugeordneten Agenten zu überführen.

28. Das System zum Routen von Multimedia-Anrufen nach Anspruch 27, das weiterhin einen Prozessor für die Einreihung in eine Warteschlange umfasst, der ausgebildet ist, um die Anfrage nach einer Agentenzuordnung in eine Warteschlange einzureihen.

29. Das System zum Routen von Multimedia-Anrufen nach Anspruch 27, worin der Routing-Prozessor weiterhin ein Internet-Konferenz-Protokoll umfasst, um eine Echtzeit-Internet-Konferenz mit dem Anrufer zu errichten.

30. Das System zum Routen von Multimedia-Anrufen nach Anspruch 29, worin das Konferenz-Protokoll weiterhin ein interaktives Fenster umfasst, das ausgebildet ist, um mittels Internet Ton und Text zwischen dem zugeordneten Agenten und dem Internet-Anrufer auszutauschen.

31. Das System zum Routen von Multimedia-Anrufen nach Anspruch 29, worin das Konferenz-Protokoll weiterhin eine Informationsanzeige umfasst, die ausgebildet ist, um dem Anrufer die Information über den Echtzeitanruf vorzulegen.

32. Das System zum Routen von Multimedia-Anrufen nach Anspruch 29, worin die Informationsanzeige weiterhin einen Timer umfasst, der ausgebildet ist, um eine geschätzten Zeit bereitzustellen, bis ein zugeordneter Agent zur Verfügung stehen wird, um in der Konferenz teilzunehmen.

33. Das System zum Routen von Multimedia-Anrufen nach Anspruch 29, worin die Informationsanzeige weiterhin ein Informationseingabefenster umfasst, das ausgebildet ist, um die Information vom Internet-Anrufer zu verlangen.

34. Das System zum Routen von Multimedia-Anrufen nach Anspruch 29, worin die Informationsanzeige für den Anrufer weiterhin eine Animations-Zeichentrickfigur umfasst, um den Internet-Anrufer zu unterhalten.

## Revendications

1. Procédé de routage d'appels multimédia dans un système distributeur d'appels automatique (10) comportant un distributeur d'appels automatique (14) connecté au réseau téléphonique public commuté (12) et un hôte (16) connecté à Internet (36), ce procédé étant **caractérisé en ce qu'**il comprend les étapes de :
réception d'un appel Internet depuis un appelant Internet par l'hôte (16) par l'intermédiaire d'Internet (36) ;
demande d'assignation d'un agent pour traiter l'appel Internet depuis le distributeur d'appels automatique (14) connecté au réseau téléphonique public commuté (12), ladite étape de demande comprenant l'envoi d'une demande avec un ensemble d'informations d'appel associées simulées sur une connexion TCP/IP depuis l'hôte (16) à une application d'appel exécutée dans le distributeur d'appels automatique (14) ;
envoi par le distributeur d'appels automatique (14), après sélection d'un agent, d'un message d'établissement d'appel à l'hôte (16), comprenant un identifiant de l'agent sélectionné ; et
transfert de l'appel Internet par l'hôte (16) à un terminal (26, 28) de l'agent assigné par le distributeur d'appels automatique (14).

2. Procédé de routage d'appels multimédia selon la revendication 1 comprenant en outre la mise en file d'attente de la demande d'assignation d'agent.

3. Procédé de routage d'appels multimédia selon la revendication 1 dans lequel l'étape de mise en file d'attente de la demande d'assignation d'agent comprend en outre l'estimation de la durée de la file d'attente.

4. Procédé de routage d'appels multimédia selon la revendication 3 dans lequel l'étape d'estimation de la durée de la file d'attente comprend en outre le transfert de la durée estimée à l'appelant Internet.

5. Procédé de routage d'appels multimédia selon la revendication 1 dans lequel l'étape de transfert de l'appel Internet à l'agent assigné par le distributeur d'appels automatique (14) comprend en outre l'établissement d'une téléconférence Internet en temps réel avec l'appelant.

6. Procédé de routage d'appels multimédia selon la revendication 5 dans lequel l'étape d'établissement de la téléconférence Internet en temps réel avec l'appelant comprend en outre l'échange d'audio et de texte entre l'agent assigné et l'appelant Internet par l'intermédiaire d'une fenêtre interactive.

7. Procédé de routage d'appels multimédia selon la revendication 5 dans lequel l'étape d'établissement d'une téléconférence en temps réel avec l'appelant comprend en outre la présentation d'un écran d'information à l'appelant à propos de l'appel en temps réel.

8. Procédé de routage d'appels multimédia selon la revendication 5 dans lequel l'étape de présentation de l'écran d'information à l'appelant comprend en outre la présentation d'un temps estimé avant qu'un agent assigné soit disponible pour participer à la téléconférence.

9. Procédé de routage d'appels multimédia selon la revendication 5 dans lequel l'étape de présentation de l'écran d'information à l'appelant concernant l'appel en temps réel comprend en outre la présentation d'un écran de demande d'information à l'appelant Internet.

10. Procédé de routage d'appels multimédia selon la revendication 5 dans lequel l'étape de présentation de l'écran d'information à l'appelant comprend en outre la présentation d'un personnage de dessin animé pour divertir l'appelant Internet pendant que l'appelant attend l'établissement de la téléconférence en temps réel.

11. Procédé de routage d'appels multimédia selon la revendication 1 dans lequel l'étape de demande d'une assignation d'agent pour traiter l'appel Internet par le distributeur d'appels automatique (14) comprend en outre la prise d'une connexion sur une jonction entrante vers le distributeur d'appels automatique (14) et l'envoi d'informations associées à l'appel simulées au distributeur d'appels automatique (14).

12. Procédé de routage d'appels multimédia selon la revendication 1 dans lequel l'étape de transfert de l'appel Internet à l'agent assigné par le distributeur d'appels automatique comprend en outre la connexion d'un téléphone de l'agent assigné à une charge fictive pour éviter l'assignation de l'agent assigné à un autre appel durant l'appel Internet.

13. Procédé de la revendication 1 comprenant en outre :
la mise en file d'attente dans une file d'attente d'appels commune avec d'autres appels reçus par l'intermédiaire du réseau téléphonique public commuté (12) sur la base d'un temps d'arrivée.

14. Procédé de routage d'appels multimédia selon la revendication 13 dans lequel l'étape d'estimation d'une durée avant que l'appel Internet mis en file d'attente atteigne la tête de la file d'attente comprend en outre le transfert de l'estimation à l'appelant Internet.

15. Système de routage d'appels multimédia dans un système de distributeur d'appels automatique ayant un distributeur d'appels automatique (14) connecté au réseau téléphonique public commuté (12) et un hôte (16) connecté à Internet (36), ce système étant **caractérisé en ce qu'**il comprend :
des moyens de réception d'un appel Internet depuis un appelant Internet par l'hôte (16) par l'intermédiaire d'Internet ;
des moyens de demande d'une assignation d'agent pour traiter l'appel Internet depuis le distributeur d'appels automatique (14), lesdits moyens de demande comprenant des moyens d'envoi d'une demande avec un ensemble d'informations d'appel associées simulées sur une connexion TCP/IP depuis l'hôte (16) à une application d'appel exécutée dans le distributeur d'appels automatique (14) ;
des moyens d'envoi par le distributeur d'appels automatique (14), lors de la sélection d'un agent, d'un message d'établissement d'appel à l'hôte (16), comprenant un identifiant de l'agent sélectionné ; et
des moyens de transfert d'appel Internet par l'hôte (16) à l'agent assigné par le distributeur d'appels automatique (14).

16. Système de routage d'appels multimédia selon la revendication 15 comprenant en outre des moyens de mise en file d'attente de la demande d'assignation d'agent.

17. Système de routage d'appels multimédia selon la revendication 15 dans lequel les moyens de mise en file d'attente de la demande d'assignation d'agent comprennent en outre des moyens d'estimation de la durée de la file d'attente.

18. Système de routage d'appels multimédia selon la revendication 17 dans lequel les moyens d'estimation de durée de la file d'attente comprennent en outre des moyens de transfert de la durée estimée à l'appelant Internet.

19. Système de routage d'appels multimédia selon la revendication 15 dans lequel les moyens de transfert de l'appel Internet à l'agent assigné par le distributeur d'appels automatique comprennent en outre des moyens d'établissement d'une téléconférence Internet en temps réel avec l'appelant.

20. Système de routage d'appels multimédia selon la revendication 19 dans lequel les moyens d'établissement de téléconférence Internet en temps réel avec l'appelant comprennent en outre des moyens d'échange d'audio et de texte entre l'agent assigné et l'appelant Internet par l'intermédiaire d'une fenêtre interactive.

21. Système de routage d'appels multimédia selon la revendication 19 dans lequel les moyens d'établissement de téléconférence Internet en temps réel avec l'appelant comprennent en outre des moyens de présentation d'un écran d'informations à l'appelant concernant l'appel en temps réel.

22. Système de routage d'appels multimédia selon la revendication 19 dans lequel les moyens de présentation de l'écran d'information à l'appelant comprennent en outre des moyens de présentation d'un temps estimé avant qu'un agent assigné soit disponible pour participer à la téléconférence.

23. Système de routage d'appels multimédia selon la revendication 19 dans lequel les moyens de présentation de l'écran d'information à l'appelant concernant l'appel en temps réel comprennent en outre des moyens pour demander des informations à l'appelant Internet.

24. Système de routage d'appels multimédia selon la revendication 17 dans lequel les moyens de présentation de l'écran d'information à l'appelant comprennent en outre des moyens de présentation d'un personnage de dessin animé pour divertir l'appelant Internet.

25. Système de routage d'appels multimédia selon la revendication 15 dans lequel les moyens de demande d'assignation d'agent pour traiter l'appel Internet depuis le distributeur d'appels automatique (14) comprennent en outre des moyens de prise d'une connexion sur une jonction entrante vers le distributeur d'appels automatique (14) et d'envoi d'informations associées à l'appel simulées au distributeur d'appels automatique (14).

26. Système de routage d'appels multimédia selon la revendication 24 dans lequel les moyens de transfert de l'appel Internet à l'agent assigné par le distributeur d'appels automatique (14) comprennent en outre des moyens de connexion d'un téléphone de l'agent assigné à une charge fictive.

27. Système de la revendication 15, comprenant en outre un système de distributeur d'appels automatique comportant un distributeur d'appels automatique (14) connecté au réseau téléphonique public commuté (12) et un hôte (16) connecté à Internet (36), un tel système comprenant :
un hôte (16) adapté pour recevoir un appel Internet depuis un appelant Internet par l'intermédiaire d'Internet (36) ;
un processeur d'agent fonctionnant dans l'hôte et adapté pour demander une assignation d'agent pour traiter l'appel Internet depuis le distributeur d'appels automatique (14) ; et
un processeur de routage adapté pour transférer l'appel Internet à un terminal (26, 28) de l'agent assigné par le distributeur d'appels automatique (14).

28. Système de routage d'appels multimédia selon la revendication 27 comprenant en outre un processeur de mise en file d'attente adapté pour mettre en file d'attente la demande d'assignation d'agent.

29. Système de routage d'appels multimédia selon la revendication 27 dans lequel le processeur de routage comprend en outre un protocole de téléconférence Internet pour établir une téléconférence Internet en temps réel avec l'appelant.

30. Système de routage d'appels multimédia selon la revendication 29 dans lequel le protocole de téléconférence comprend en outre une fenêtre interactive adaptée pour échanger de l'audio et du texte entre l'agent assigné et l'appelant Internet par l'intermédiaire d'Internet.

31. Système de routage d'appels multimédia selon la revendication 29 dans lequel le protocole de téléconférence comprend en outre un écran d'information adapté pour présenter des informations à l'appelant concernant l'appel en temps réel.

32. Système de routage d'appels multimédia selon la revendication 29 dans lequel l'écran d'information comprend en outre un minuteur adapté pour fournir un temps estimé avant qu'un agent assigné soit disponible pour participer à la téléconférence.

33. Système de routage d'appels multimédia selon la revendication 29 dans lequel l'écran d'information comprend en outre une fenêtre d'entrée d'information adaptée pour demander des informations à l'appelant Internet.

34. Système de routage d'appels multimédia selon la revendication 29 dans lequel l'écran d'information à l'appelant comprend en outre un personnage de dessin animé pour divertir l'appelant Internet.
